# EUROPÄISCHE PATENTSCHRIFT

(11) **EP 3 313 699 B1**
(45) Veröffentlichungstag und Bekanntmachung des Hinweises auf die Patenterteilung: **02.12.2020**
(21) Anmeldenummer: 16731573.8
(22) Anmeldetag: 21.06.2016
(51) Int. Cl.: B60T 13/567

(54) **PNEUMATISCHER BREMSKRAFTVERSTÄRKER MIT EINEM VERBINDUNGSBOLZEN**
PNEUMATIC BRAKE BOOSTER WITH A CONNECTING BOLT
SERVOMOTEUR PNEUMATIQUE D'ASSISTANCE AU FREINAGE AVEC UN TIRANT DE CONNECTION

(30) Priorität: 29.06.2015 DE 102015212089
(43) Veröffentlichungstag der Anmeldung: 02.05.2018
(73) Patentinhaber: Continental Teves AG & Co. OHG, 60488 Frankfurt am Main (DE)
(72) Erfinder: FALLER, Jürgen, 63796 Kahl (DE); HERKE, Oliver, 60488 Frankfurt (DE); EBERHART, Rene Peter, 61440 Oberursel (DE)
(86) Internationale Anmeldenummer: PCT/EP2016/064273
(87) Internationale Veröffentlichungsnummer: WO 2017/001237

(56) Entgegenhaltungen:
- EP-A1- 1 870 306
- EP-A1- 2 058 195
- EP-A1- 2 072 362
- GB-A- 2 025 549

## Beschreibung

Die Erfindung bezieht sich auf einen pneumatischer Bremskraftverstärker für eine hydraulische Kraftfahrzeugbremsanlage nach dem Oberbegriff des Anspruchs 1.

Derartige Bremskraftverstärker sind weit verbreitet und beispielsweise aus WO0061416A1 oder WO2004101341A2 bekannt.

Das Verstärkergehäuse derartiger Bremskraftverstärker umfasst meist zwei napfförmige Gehäuseschalen, die die seriell entlang einer Bremskraftverstärker-Mittelachse angeordnet sind.

Gattungsgemäße Bremskraftverstärker verfügen über Verbindungsbolzen, die in dem Verstärkergehäuse achsparallel zur Mittelachse angeordnet sind und mit wenigstens einem Endabschnitt, meist jedoch mit beiden Endabschnitten, das Verstärkergehäuse von Innen nach Außen durchragen. An diesen Endabschnitten der Verbindungsbolzen werden dann Hauptbremszylinder montiert und/oder der Bremskraftverstärker am Fahrzeug befestig, so dass das Verstärkergehäuse im Betrieb innerhalb einer Bremsanlage zwischen dem Fahrzeug und dem Hauptbremszylinder eingeklemmt ist.

Beim Betrieb herrscht im Inneren des Verstärkergehäuses ein Unterdruck, so dass die Gehäuseschalen dadurch gegeneinander gepresst werden. Um ein Kollabieren bzw. eine Implosion des allgemein dünnwandigen Verstärkergehäuses aufgrund von Unterdruck zu verhindern, wenden am Verbindungsbolzen zwei Stützformationen angeordnet, die das Verstärkergehäuse von innen stützten - jede Stützformation eine der Gehäuseschalen. Funktionsbedingt ist im Inneren des Verstärkergehäuses eine Rückstellfeder angeordnet, die mit einer Vorspannkraft gegen die beiden Gehäuseschalen wirkt. Um ein Auseinanderfallen des Bremskraftverstärker bei seiner Handhabung, dem Transport, im Versand und Dergleichen bis zu Montage des Hauptbremszylinders und/oder Montage im Fahrzeug zu verhindern, müssen die Gehäuseschalen zusammengehalten werden. Um dabei eine Verwendung gesonderter, zusätzlicher Transportsicherungsvorrichtungen, die vor der Endmontage entfernt werden müssen zu vermeiden, ist es bekannt, die Gehäuseschalen an ihrem radialen Außenrand miteinander fest zu verbinden. Hierfür werden oft Laschen an einer der Gehäuseschalen um einen radialen Rand oder Bund an einer anderen Gehäuseschale umgebogen bzw. umgelegt. Dadurch wird sichergestellt, dass die Vorspannkraft der eingespannten Rückstellfeder am radialen Außenrand des Verstärkergehäuses aufgenommen und die Gehäuseschalen nicht auseinandergeschoben werden.

Zum Umlegen von derartigen Laschen werden Werkzeuge benötigt, die uneffektiv viel Raum beanspruchen. Zudem wird durch das Umlegen von Laschen bei lackierten Gehäuseschalen oft der Lack oder anderweitige Schutzbeschichtung beschädigt. Dies kann beim Betrieb des Bremskraftverstärkers im Fahrzeug zu einer unerwünschten Korrosion am Verstärkergehäuse führen.

Zum gleichen Zweck ist es aus EP 2 072 362 A1 bekannt, Gehäuseschalen durch dauerhaft am Bremskraftverstärker verbleibende, formschlüssig in eine Ringnut am Verbindungsbolzen eingreifende Sicherungselemente wie insbesondere Sicherungsringe, Sicherungsscheiben oder an Gehäuseschalen ausgebildete Federlaschen zu sichern.

Ferner ist es aus GB 2 025 549 A bekannt, die rückwärtige Gehäuseschale durch eine am Verbindungsbolzen außen angeschreubte Schraubmutter zu sichern.

Die Erfindung beruht somit auf der Aufgabe, einen verbesserten Bremskraftverstärker der eingangsgenannten Art mit den gegenüber dem bekannten Stand der Technik reduzierten Nachteilen anzubieten.

Die Aufgabe wird erfindungsgemäß durch einen Bremskraftverstärker mit der Merkmalskombination nach dem Anspruch 1 gelöst. Unteransprüche zusammen mit Figuren und Beschreibungen geben weitere erfindungsgemäße Ausführungsformen und vorteilhafte Weiterbildungen an.

Erfindungsgemäß kann jede Gehäuseschale jeweils mit dem Verbindungsbolzen verbunden werden, so dass ihre Verschiebung axial nach außen am Verbindungsbolzen unterbunden wird.

Die Vorspannkraft einer Rückstellfeder im Verstärkergehäuse wird in den ohnehin zugstabilen Verbindungsbolzen eingeleitet, so dass auf eine zusätzliche Verbindung oder Kopplung der Gehäuseschalen an ihrem radialen Außenrand verzichtet werden kann.

Das Vorsehen und umlegen von Laschen ist dadurch nicht mehr erforderlich, die Gefahr einer Beschädigung der Schutzbeschichtung wird vermieden, die Korrosion im Außenbereich reduziert und die Dauerhaltbarkeit dadurch verbessert.

Die Gestaltung der Gehäuseschale kann einfacher und preiswerter werden, das Außendesign des Verstärkergehäuses kann ebenfalls verbessert werden.

Die erfindungsgemäße Verbindung umfasst zwischen einer Gehäuseschale und dem Verbindungsbolzen wenigstens einen Formschluss, wodurch die Dauerhaltbarkeit verbessert, die Montage vereinfacht und Montagefehler durch eindeutige Erkennung von Fehlmontagen vermieden werden.

Eine erfindungsgemäße Ausführung sieht vor, dass der Formschluss durch eine Umformung eines Abschnitts der Gehäuseschale nach deren Montage am Verbindungsbolzens erzeugt wird. Hierdurch kann mithilfe relativ einfacher und kostengünstiger Werkzeige eine besonders feste und dauerhafte Verbindung hergestellt werden.

In unterschiedlichen Weiterbildungen kann der umformtechnisch erstellter Formschluss mittels eines, den Verbindungsbolzen radial umgreifenden rohrförmigen axialen Vorsprungs erzeigt werden, an dem ein umzuformbarer Abschnitt bereichsweise in einen axialen Hinterschnitt am Verbindungsbolzen eingedrückt wird.

Ebenso kann der Formschluss durch eine bereichsweise Umformung des Verbindungsbolzens nach Montage einer Gehäuseschale erzeugt werden, beispielsweise durch eine Lancierung indem der Werkstoff des Verbindungsbolzens von seiner Oberfläche abgeschabt und vor der Gehäuseschale aufgeworfen bzw. gestaucht wird. Damit kann eine besonders kompakte Verbindung erzeigt und die Gehäuseschale am Verbindungsbereich zum Verbindungsbolzen sehr einfach gestaltet werden.

In einer anderen erfindungsgemäßen Ausführung kann der Formschluss auch durch ein zusätzliches, gesondertes Sperrelement gebildet werden, das außerhalb des Verstärkergehäuses am Verbindungsbolzen montiert wird.

Das Sperrelement kann als eine Hülse ausgebildet sein, die auf den Verbindungsbolze aufgeschoben und bereichsweise in einen axialen Hinterschnitt am Verbindungsbolzen eingedrückt wird. Die Hülse kann dabei aus einem kostengünstigen und rostfreien Werkstoff - beispielsweise Aluminium bestehen.

Dadurch kann eine dauerhaft sichere und korrosionsreduzierte Verbindung erstellt werden, und die Gehäuseschale, insbesondere im Bereich der Öffnung für den Verbindungsbolzen besonders einfach gestaltet werden.

Durch die erfindungsgemäße Fixierung der Gehäuseschalen am Verbindungsbolzen können die Gehäuseschalen in einer erfindungsgemäßen Weiterbildung an ihren radial äußeren Randabschnitten lose voneinander entkoppelt gestaltet werden.

In einer weiteren Weiterbildung können die Gehäuseschalen an ihren radial äußeren Randabschnitten zur besseren Abstützung gegen Unterdruckkräfte im Bremsbetrieb in Richtung axial zueinander in einen Anschlag gebracht und in Richtung axial außenander entkoppelt werden.

Werkzeuge zur Herstellung der Gehäuseschale werden dadurch erheblich vereinfacht, die Herstellkosten und Materialbedarf reduziert. Weil ein direkter Kontakt zwischen den metallischen Gehäuseschalen nicht besteht oder zumindest stark reduziert ist, wird auch die Geräuschübertragung reduziert.

Ein sicherer Transport und eine vereinfachte Handhabung des Bremskraftverstärkers sind dennoch gewährleistet, da das Verstärkergehäuse an den Verbindungsbolzen sicher zusammengehalten ist.

Im Folgenden soll die Erfindung näher erläutert werden. Dabei wird auf die Beschreibung von allgemein bekannten Aspekten und Funktionen eines gattungsgemäßen Bremskraftverstärkers weitestgehend verzichtet und lediglich auf die erfindungsrelevanten Details eingegangen. Es ist weiter zu beachten, dass die Erfindung sowohl an einem Single-, als auch einem Tandem-Bremskraftverstärker anwendbar ist.

Im Einzelnen zeigt die
Fig.1 Eine Teilansicht einer bekannten Ausführung eines gattungsgemäßen Bremskraftverstärkers in Schnittdarstellung.
Fig.2 Detailansicht einer umformtechnisch erzeugten Verbindung zwischen einer Gehäuseschale und einem Verbindungsbolzen einer ersten erfindungsgemäßen Ausführungsform vor a) und der Umformung b).
Fig.3 Detailansicht einer Rastverbindung zwischen einer Gehäuseschale und einem Verbindungsbolzen von zwei nicht erfindungsgemäßen Ausführungsformen im Schnitt a) sowie Draufsichten von Ausführungen mit einem Kragen b) und Federlaschen c) .
Fig.4 Detailansicht einer weiteren umformtechnisch erzeugten Verbindung zwischen einer Gehäuseschale und einem Verbindungsbolzen einer ersten erfindungsgemäßen Ausführungsform vor a) und der Umformung b).
Fig.5 Detailansicht der Verbindung zwischen einer Gehäuseschale und dem Verbindungsbolzen einer anderen nicht erfindungsgemäßen Ausführungsform, mit einem radial elastischen Sperrelement am Verbindungsbolzen in Seitenansicht a) sowie Stirnansicht geschnitten b).
Fig.6 Detailansicht der Verbindung zwischen einer Gehäuseschale und dem Verbindungsbolzen einer weiteren nicht erfindungsgemäßen Ausführungsform, mit einem geschraubten Sperrelement in zwei verschiedenen Ausführungen a) und b).
Fig.7 Detailansicht der Verbindung zwischen einer Gehäuseschale und dem Verbindungsbolzen einer weiteren erfindungsgemäßen Ausführungsform, mit einem umformtechnisch fixierten Sperrelement.
Fig.8 Detailansichten des radial äußeren Annäherungsabschnitts der Gehäuseschalen eines erfindungsgemäßen Bremskraftverstärkers in einer vollständig entkoppelten Ausführung a) sowie mit einem axialen Anschlag b).

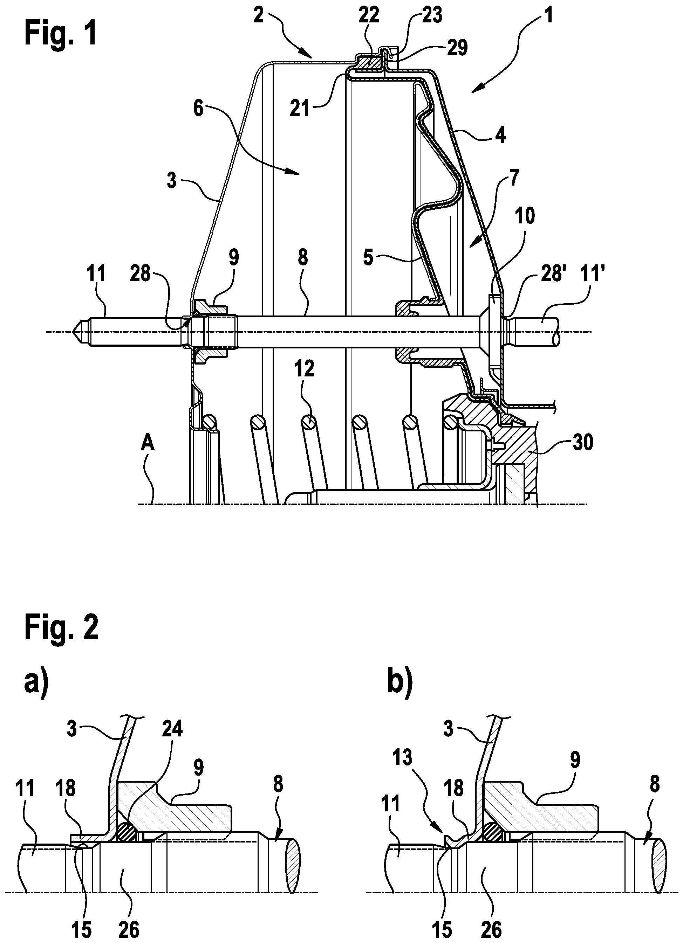

Fig.1 zeigt in eine Teilansicht einer bekannten Ausführung eines gattungsgemäßen pneumatischen Bremskraftverstärkers 1.

Das Verstärkergehäuse 2 welches umfasse eine vordere Gehäuseschale 3 und eine hintere Gehäuseschale 4 umfasst, die seriell entlang einer Mittelachse A angeordnet sind. Entlang der Mittelachse A wird eine Arbeitswand 5 begrenzt verschoben, die eine Unterdruckkammer 6 von einer Arbeitskammer 7 trennt. Zur Abdichtung Unterdruckkammer 6 von der Arbeitskammer 7 ist eine, bereichsweise an der Arbeitswand 5 angelegte Rollmembrane 21 vorgesehen. Am radialen Außenrand der Rollmembrane 21 ist eine Dichtwulst 22 angeformt, die axial sowie radial zwischen den Gehäuseschalen 3,4 eingeklemmt ist und zur Abdichtung des Verstärkergehäuses 2 gegen Umgebung sowie zur Fixierung der Rollmembrane 21 dient.

In dem Verstärkergehäuse 2 ist achsparallel zur Mittelachse A ein Verbindungsbolzen 8 angeordnet. In der gezeigten Ausführung durchragt der Verbindungsbolzen 8 mit seinen Endabschnitten 11,11' das Verstärkergehäuse 2 durch die Öffnungen 28,28' in den Gehäuseschalen 3,4 von Innen nach Außen.

Die Enden 11,11' dienen für eine spätere Montage des Bremskraftverstärkers 1 am Fahrzeug sowie der Montage eines nicht gezeigten Hauptbremszylinders am Bremskraftverstärker 1 und sind meist mit Gewinden verstehen.

Zum Stützen des Verstärkergehäuses 2 gegen Implodieren bzw. Kollabieren aufgrund Unterdruckkräften sind am Verbindungsbolzen 8 zwei Stützformationen 9 und 10 angeordnet, die an das Verstärkergehäuse 2 von innen stützen.

Eine Rückstellfeder 12 ist in dem Verstärkergehäuse 2 eingespannt und wirkt mit ihrer Vorspannkraft von Innen auf die beiden Gehäuseschalen 3 und 4. Die Rückstellfeder 12 dient im Wesentlichen dem Rückversetzen eines Steuergehäuses 30 nach einem Bremsvorgang in seine hier gezeigte Ausgangsposition.

Damit das Verstärkergehäuse 2 vor Montage eines Hauptbremszylinders und Montage des Bremskraftverstärkers 1 am Fahrzeugs aufgrund der Vorspannkraft der Rückstellfeder sowie der allgemeinen Handhabung nicht auseinanderfällt und alle Komponenten an den vorgesehenen Positionen verbleiben, sind an der vorderen Gehäuseschale 3 radial außen am Umfang verteilte Laschen 23 ausgebildet, die um einen umlaufenden, in der gezeigten Ausführung gefalzten Bund 29 an der hinteren Gehäuseschale 4 umgelegt sind, so dass die Gehäuseschalen 3 und 4 axial nicht auseinander geschoben werden können.

Fig.2 zeigt eine Detailansicht einer ersten erfindungsgemäßen Ausführungsform mit einem umformtechnisch erzeugten Formschluss 13 zwischen einer Gehäuseschale 3 und dem Verbindungsbolzen 8. In der Ansicht a) ist der Zustand vor der Umformung und in der Ansicht b) der Endstand nach der Umformung gezeigt.

An der Gehäuseschale 3 ist ein axial vorspringender rohrförmiger Vorsprung 18 ausgebildet, der mit seiner Wandung den Verbindungsbolzen 8 radial eng umschließt. Der Verbindungsbolzen 8 weist in dem vom Vorsprung 18 umschlossenen Abschnitt einen axial in Richtung des benachbarten Endabschnitts 11 des Verbindungsbolzens 8 wirkenden Hinterschnitt 15 auf. Der Hinterschnitt 15 kann innerhalb der Erfindung wie abgebildet als eine umlaufende Nut oder auch in hier nicht gezeigten Ausführungen als ein Freistich, eine Abstufung oder jedwede andere Außendurchmesseränderung am Verbindungsbolzen 8 zwischen dem Dichtbereich 26 und dem Gewinde am Endabschnitt 11 ausgeführt sein.

Nach dem aufsetzen des Gehäuseschale 3 auf den Verbindungsbolzen 8 wird der Vorsprung 18 bereichsweise umgeformt und dabei in den Hinterschnitt 15 eingepresst, so dass ein Formschluss 13 entsteht, welcher vorzugsweise in beide axialen Richtungen, zumindest jedoch in Richtung des benachbarten Endabschnitts 11 des Verbindungsbolzens 8 wirkt.

Über den Formschluss 13 wird die Federkraft der in der Fig. 1 gezeigten Rückstellfeder 12 von der Gehäuseschale 3 direkt in den Verbindungsbolzen 8 eigeleitet. Eine axiale Verschiebungsmöglichkeit der Gehäuseschale 3 nach außen, in diesem Fall zum benachbarten Endabschnitt 11 des Verbindungsbolzens 8 wird generell unterbunden. Vielmehr ist die Gehäuseschale 3 zwischen dem Formschluss 13 und der Stützformation 9 eingeklemmt und damit auf dem Verbindungsbolzen 8 in einer definierten axialen Lage festgehalten.

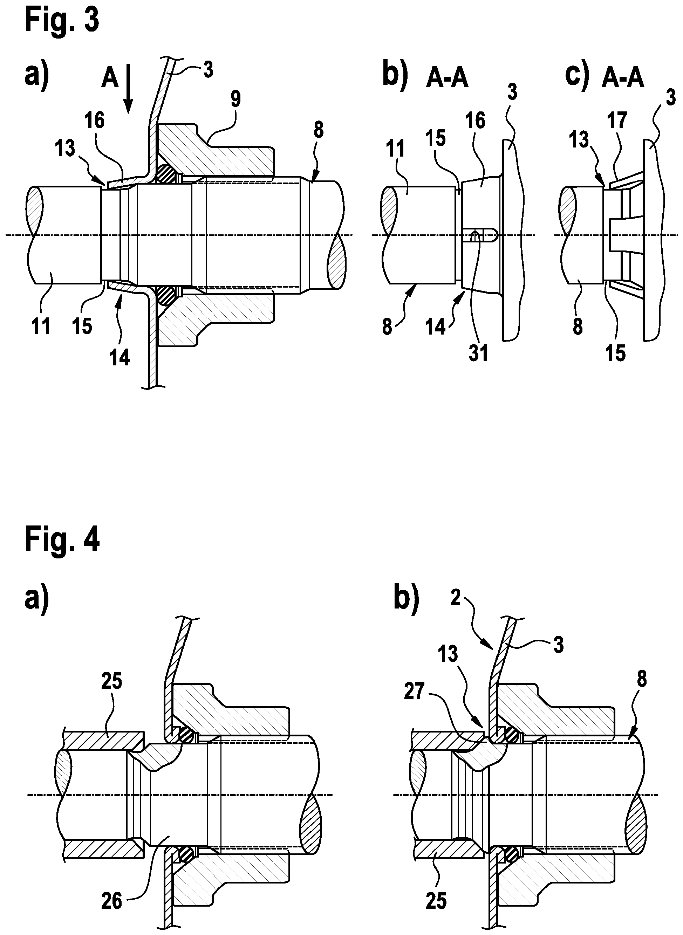

Fig.3 zeigt eine Detailansicht einer nicht erfindungsgemäßen Ausführungsform. Die Verbindung zwischen dem Verbindungsbolzen 8 und der Gehäuseschale 3 ist ebenfalls formschlüssig mit einem axial in Richtung Endabschnitt 11 des Verbindungsbolzens 8 wirkendem Formschluss 13 ausgeführt, jedoch im Unterschied zu der Ausführung nach Fig.2 als eine Rastverbindung ausgebildet. Hierfür weist die Gehäuseschale 3 eine in radiale Richtung elastische und in axiale Richtung im Wesentlichen steife Formation 14 auf, die beim Aufschieben der Gehäuseschale 3 auf dem Verbindungsbolzen 8 selbsttätig in dem axialen Hinterschnitt 15 am Verbindungsbolzen 8 einrastet.
Die Ansichten b) und c) zeigen beispielhaft zwei verschiedene Ausführungen der Rastverbindung. Bei der Ausführungsform in der Ansicht b) ist an der Gehäuseschale 3 ein den Verbindungsbolzen 8 radial umlaufender, axial geschlitzter konischer Kragen 16 ausgebildet. Der kleinere Durchmesser am Konus ist kleiner als der Außendurchmesser des Endabschnitts 11 des Verbindungsbolzens 8 ausgeführt. Der axiale Schlitz 31, von dem mehrere, vorzugsweise 3 am Umfang des Kragens verteilt sein können, ermöglicht eine elastische Aufweitung des Kragens 16, damit es über das Endabschnitt 11 des Verbindungsbolzens 8 ohne plastische Verformung und Beschädigung geschoben werden kann.

Bei der Ausführungsform in der Ansicht c) ist an der Gehäuseschale 3 statt eines geschlitzten Kragens 16 mehrere einzelne, von der Waagerechen in Richtung Verbindungsbolzen 8 geneigte Federlaschen 17 ausgebildet, die mit ihren jeweiligen Endabschnitten zur Bildung des Formschlusses 13 in den axialen Hinterschnitt 15 am Verbindungsbol zen 8 elastisch eingeschnappt sind.

Bei einer weiteren Ausführungsform in der Fig.4 wird der Formschluss 13 durch das Umformen es Verbindungsbolzens 8 nach Montage der Gehäuseschale 3 erzeugt. Die Ansicht a) zeigt den Zustand vor und die Ansicht b) nach der Umformung.

Das Werkstoff des Verbindungsbolzens 8 wird aus seiner ursprünglichen Position am Schaft des Verbindungsbolzens 8 durch das Werkzeug 25 axial in Richtung Gehäuseschale 3 verdrängt und vor dieser aufgeworfen und gestaucht.

Bei einem gezeigten rohrförmigen Werkzeug 25 entsteht dabei am Verbindungsbolzen 8 eine umlaufende Wulst 27. Bei Verwendung eines nicht gezeigten Werkzeugs mit einzelnen Lanzen statt einer ringförmigen Arbeitskante, werden am Verbindungsbolzen 8 entsprechend statt einer radial umlaufenden Wulst 27 einzelne, radial am Umfang verteilte Erhebungen erzeugt, die jedoch die gleiche Wirkung erzielen. Ein derartiges Fügeverfahren wird auch als Lancierung bzw. Lanzierung bezeichnet.

Bei weiteren erfindungsgemäßen Ausführungsformen wird der Formschluss 13 mittels eines zusätzlichen gesonderten Sperrelements 19 erzeugt, das auf dem Verbindungsbolzen 8 montiert ist.

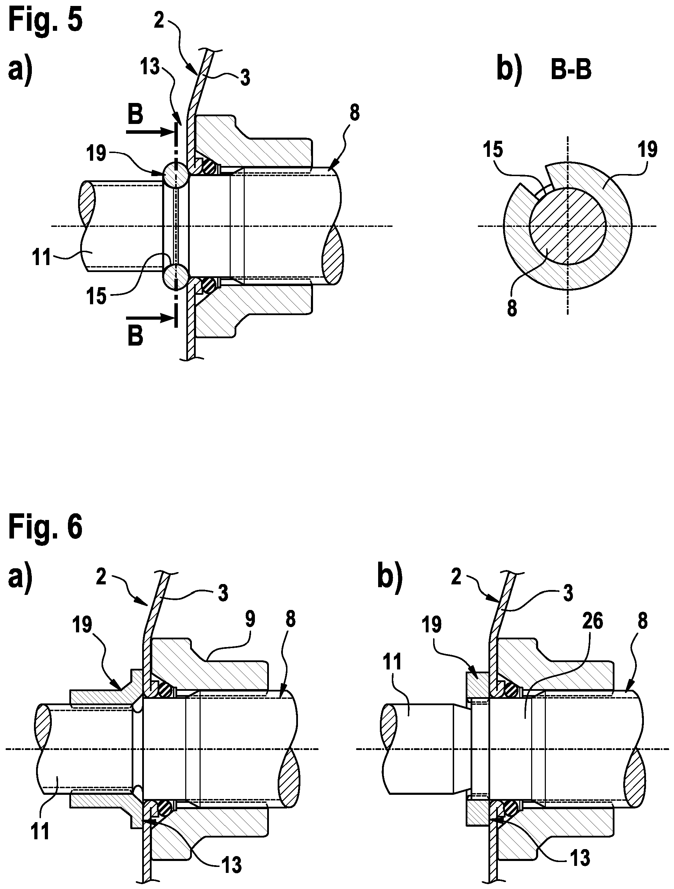

Bei der Ausführungsform nach der Fig.5 ist das Sperrelement 19 in radiale Richtung elastisch federnd gestaltet und in einem axialen Hinterschnitt 15 am Verbindungsbolzen 8 unmittelbar vor der Gehäuseschale 3 eingeschnappt. Als derartige Sperrelemente eignen sich beispielsweise Sprengringe, Seegeringe oder weitere, insbesondere Standardbauelemente mit einer vergleichbaren Funktionalität.

Weil diese Stelle bei nachfolgenden Montagevorgängen durch einen Flansch eines Hauptbremszylinders oder eine Blechwand des Fahrzeugs abgedeckt werden, ist eine Verliersicherheit des Sperrelements beim vibrationsbehafteten Fahrzeugbetrieb sichergestellt.

Das Sperrelement 19 in den Ausführungen nach Fig.6 ist als ein Schraubelement ausgebildet, das auf ein Gewinde 20 am Verbindungsbolzen 8 aufgeschraubt wird und damit einen Formschluss zu der Gehäuseschale 3 bildet.

In der Ansicht a) ist das Sperrelement 19 als eine auf das Gewinde 20 aufgeschraubte Gewindehülse gestaltet, das Gewinde 20 ist dabei am Endabschnitt 11 des Verbindungsbolzens 8 angeordnet und kann auch beispielsweise zur Montage eines Hauptbremszylinders verwendet werden.

Bei der Ausführung in der Ansicht b) ist das Sperrelement 19 als eine Mutter vorgesehen, und das Gewinde 20 an einem dem Dichtbereich 26 unmittelbar benachbarten Abschnitt des Verbindungsbolzens 8 angebracht.

Bei einer anderen erfindungsgemäßen Ausführungsform in Fg. 7 ist das Sperrelement 19 als eine zylindrische Hülse 19 mit einem umlaufenden Bund bzw. Kragen gestaltet. Die Hülse 20 wird nach der Montage der Gehäuseschale 3 auf den Verbindungsbolzen 8 bis zum Anschlag an der Gehäuseschale 3 aufgeschoben, danach wird ein Bereich des rohrförmigen Körpers der Hülse 20 äquivalent zu dem bei der Fig.2 beschriebenen Prozess in einen axialen Hinterschnitt 15 am Verbindungsbolzen 8 eingepresst bzw. hineingedrückt.

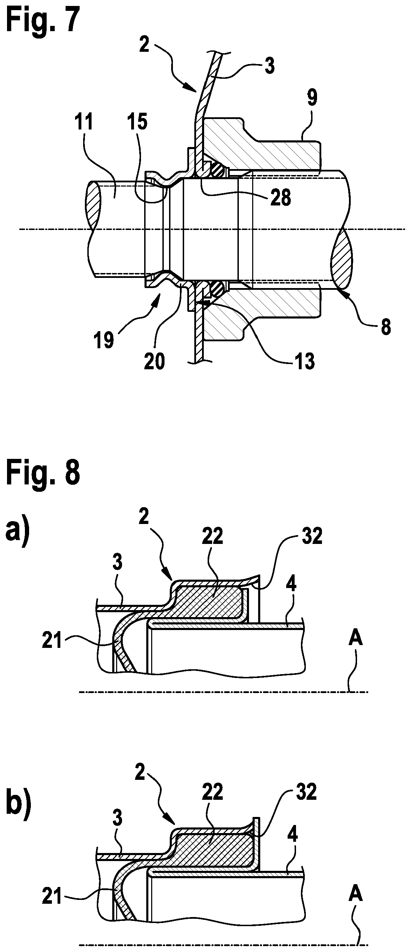

In der Fig.8 sind in den Ansichten a) und b) zwei verschiedene Weiterbildungen von einer der vorstehend beschriebenen erfindungsgemäßen Ausführungsformen des Bremskraftverstärkers 1 gezeigt.

Die Ansichten zeigen den radialen Außenabschnitt des Verstärkergehäuses 2 im Bereich der Annäherung der Gehäuseschalen 3 und 4.

Zwischen den beiden Gehäuseschalen 3 und 4 ist die Dichtwulst 22 der Rollmembrane 21 sowohl radial als auch axial eingeklemmt. Im Unterschied zu der bekannten Ausführung nach Fig. 1 fehlt hier die Lasche 23, da eine Verbindung oder Kopplung der beiden Gehäuseschalen 3 und 4 in Richtung voneinander sowie achsparallel zu der Mittelachse A nicht mehr erforderlich ist.

Bei der Ausführung nach der Ansicht a) sind die Gehäuseschalen 3 und 4 gänzlich voneinander entkoppelt, lose angeordnet.

Die Dichtwulst 22 dichtet radial zwischen den beiden Gehäuseschalen 3 und 4 ab und nimmt zusätzlich die axialen Kräfte auf, welche beim Bremsbetrieb aufgrund der Druckänderungen innerhalb des Verstärkergehäuses 2 entstehen.

Eine Einfuhrschräge 32 an der Gehäuseschale 3 dient einer vereinfachten Montage des Dichtwulstes 22 und der Gehäuseschale 4.

Bei der Ausführung nach der Ansicht b) sind die Gehäuseschalen 3 und 4 in einem Anschlag zueinander angeordnet, wobei der Anschlag lediglich zur gegenseitigen Abstützung der beiden Gehäuseschalen 3 und 4 in Richtung axial zueinander wirkt, um die Steifigkeit des Verstärkergehäuses 2 gegenüber von Axialkräften zu erhöhen, welche durch den Unterdruck im Inneren des Verstärkergehäuses 2 beim Betrieb entstehen.

### Bezugszeichenliste

- 1: Bremskraftverstärker
- 2: Verstärkergehäuse
- 3: Gehäuseschale
- 4: Gehäuseschale
- 5: Arbeitswand
- 6: Unterdruckkammer
- 7: Arbeitskammer
- 8: Verbindungsbolzen
- 9: Stützformation
- 10: Stützformation
- 11: Endabschnitt
- 12: Rückstellfeder
- 13: Formschluss
- 14: radial elastische Formation
- 15: Axialer Hinterschnitt
- 16: Kragen
- 17: Federlasche
- 18: Vorsprung
- 19: Sperrelement
- 20: Hülse
- 21: Rollmembrane
- 22: Dichtwulst
- 23: Lasche
- 24: Dichtring
- 25: Werkzeug
- 26: Dichtbereich
- 27: Erhebung
- 28: Öffnung
- 29: Bund
- 30: Steuergehäuse
- 31: Schlitz
- 32: Einfuhrschräge
- A: Mittelachse

## Patentansprüche

1. Pneumatischer Bremskraftverstärker (1) für eine hydraulische Kraftfahrzeugbremsanlage, mit einem Verstärkergehäuse (2), welches eine vordere Gehäuseschale (3) und eine hintere Gehäuseschale (4) umfasst, die seriell entlang einer Mittelachse (A) angeordnet sind, mit wenigstens einer Rückstellfeder (12), welche in dem Verstärkergehäuse (2) mit einer Vorspannkraft axial vorgespannt angeordnet ist, mit wenigstens einem Verbindungsbolzen (8), welcher in dem Verstärkergehäuse (2) achsparallel zur Mittelachse (A) axial gestreckt angeordnet ist, mittels zweier Stützformationen (9, 10) das Verstärkergehäuse (2) von innen stützt und dabei auf wenigstes einer Seite, insbesondere beidseitig, das Verstärkergehäuse (2) von innen nach außen mit einem Endabschnitt (11) durchragt, wobei die Gehäuseschalen (3,4) zur Sicherung gegen eine relative axiale Auseinanderverschiebung jeweils über wenigstens einen Formschluss (13) mit dem Verbindungsbolzen (8) verbunden angeordnet sind, wobei die Verbindung zwischen dem Verbindungsbolzen (8) und den Gehäuseschalen (3, 4) zur Einleitung der Vorspannkraft in den Verbindungsbolzen ausgebildet ist, und wobei die Verbindung vor Montage des Bremskraftverstärkers (1) im Kraftfahrzeug und/oder Montage eines Hauptbremszylinders am Bremskraftverstärker (1) erzeugt ist, **dadurch gekennzeichnet, dass** der Formschluss (13) nach Montage der Gehäuseschale (3,4) am Verbindungsbolzen (8) durch eine Umformung eines Abschnitts der Gehäuseschale (3,4) oder einer gesonderten, außerhalb des Verstärkergehäuses (2) am Verbindungsbolzen (8) montieren ; zylindrischen Hülse (19) erzeugt ist.

2. Bremskraftverstärker (1) nach Anspruch 1, **dadurch gekennzeichnet, dass** der umzuformbare Abschnitt der Gehäuseschale (3,4) als ein den Verbindungsbolzen (8) radial umgreifender rohrförmiger axialer Vorsprung (18) ausgebildet ist, der bereichsweise in einen axialen Hinterschnitt (15) am Verbindungsbolzen (8) eingedrückt wird.

3. Bremskraftverstärker (1) nach Anspruch 1, **dadurch gekennzeichnet, dass** das Sperrelement (19) als eine Hülse (20) ausgebildet ist, die auf den Verbindungsbolzen (8) aufgeschoben und bereichsweise in einen axialen Hinterschnitt (15) am Verbindungsbolzen (8) eingedrückt ist.

4. Bremskraftverstärker (1) nach Anspruch 1, **dadurch gekennzeichnet, dass** die Gehäuseschalen (3,4) an ihren radial äußeren Randabschnitten in Richtung axial auseinander lose voneinander entkoppelt angeordnet sind.

5. Bremskraftverstärker (1) nach Anspruch 4, **dadurch gekennzeichnet, dass** die Gehäuseschalen (3,4) an ihren radial äußeren Randabschnitten in Richtung axial zueinander in einen Anschlag gebracht angeordnet sind.

## Claims

1. Pneumatic brake booster (1) for a hydraulic motor vehicle brake system, having a booster housing (2) which comprises a front housing shell (3) and a rear housing shell (4), which are arranged in series along a central axis (A), having at least one restoring spring (12) which is arranged in the booster housing (2) in such a way that it is axially prestressed with a prestressing force, having at least one connecting pin (8) which is arranged so as to extend axially in the booster housing (2) in axis-parallel fashion with respect to the central axis (A), supports the booster housing (2) from the inside by means of two supporting formations (9, 10) and in doing so projects with an end section (11) through the booster housing (2) from the inside to the outside on at least one side, in particular on both sides, wherein the housing shells (3, 4) are arranged in such a way that they are each connected by means of at least one form fit (13) to the connecting pin (8) in order to secure them against being pushed apart relatively in an axial direction, wherein the connection between the connecting pin (8) and the housing shell (3, 4) is designed to introduce the prestressing force into the connecting pin, and wherein the connection is produced before the brake booster (1) is mounted in the motor vehicle and/or before a master brake cylinder is mounted on the brake booster (1), **characterized in that** the form fit (13) is produced, after the housing shells (3, 4) are mounted on the connecting pin (8), by deformation of a section of the housing shells (3, 4) or of a separate cylindrical sleeve (19) which is mounted on the connecting pin (8) outside the booster housing (2).

2. Brake booster (1) according to Claim 1, **characterized in that** the deformable section of the housing shell (3, 4) is embodied as a tubular axial projection (18) which engages radially around the connecting pin (8) and which is partially pressed into an axial undercut (15) on the connecting pin (8) .

3. Brake booster (1) according to Claim 1, **characterized in that** the locking element (19) is embodied as a sleeve (20) which is fitted onto the connecting pin (8) and which is partially pressed into an axial undercut (15) on the connecting pin (8) .

4. Brake booster (1) according to Claim 1, **characterized in that** the housing shells (3, 4) are arranged so as to be loosely decoupled from one another in a direction axially apart from one another at their radially outer edge sections.

5. Brake booster (1) according to Claim 4, **characterized in that** the housing shells (3, 4) are arranged so as to be brought axially into contact with one another at their radially outer edge sections.

## Revendications

1. Servofrein pneumatique (1) pour un système de freinage hydraulique de véhicule automobile, avec un boîtier de servofrein (2) qui comprend une coque de boîtier avant (3) et une coque de boîtier arrière (4) qui sont disposées en série le long d'un axe médian (A), avec au moins un ressort de rappel (12) qui est disposé dans le boîtier de servofrein (2) de manière axialement précontrainte par une force de précontrainte, avec au moins un boulon de raccordement (8) qui est disposé dans le boîtier de servofrein (2) en parallèle à l'axe médian (A) de manière axialement étirée, qui soutient au moyen de deux éléments de soutien (9, 10) le boîtier de servofrein (2) depuis l'intérieur tout en dépassant d'une partie d'extrémité (11) sur au moins un côté, en particulier des deux côtés, du boîtier de servofrein (2) de l'intérieur à l'extérieur, dans lequel les coques de boîtier (3, 4) sont disposées en étant reliées pour prévenir une séparation axiale relative respectivement par au moins une complémentarité de forme (13) avec le boulon de raccordement (8), le raccordement entre le boulon de raccordement (8) et les coques de boîtier (3, 4) étant réalisé pour introduire la force de précontrainte dans le boulon de raccordement, et dans lequel le raccordement est créé avant le montage du servofrein (1) dans le véhicule automobile et/ou le montage d'un maître-cylindre de frein sur le servofrein (1), **caractérisé en ce que** la complémentarité de forme (13) est établie après le montage de la coque de boîtier (3, 4) au niveau du boulon de raccordement (8) par une déformation d'une partie de la coque de boîtier (3, 4) ou d'une douille cylindrique (19) séparée, montée à l'extérieur du boîtier de servofrein (2) sur le boulon de raccordement (8).

2. Servofrein (1) selon la revendication 1, **caractérisé en ce que** la partie déformable de la coque de boîtier (3, 4) est réalisée comme une saillie axiale tubulaire (18) entourant radialement le boulon de raccordement (8) et qui est enfoncée par endroits dans une contre-dépouille axiale (15) sur le boulon de raccordement (8).

3. Servofrein (1) selon la revendication 1, **caractérisé en ce que** l'élément de blocage (19) est réalisé sous forme de douille (20) qui est emmanchée sur le boulon de raccordement (8) et est enfoncée par endroits dans une contre-dépouille axiale (15) sur le boulon de raccordement (8).

4. Servofrein (1) selon la revendication 1, **caractérisé en ce que** les coques de boîtier (3, 4) sont disposées au niveau de leurs parties marginales radialement extérieures en étant désaccouplées librement l'une de l'autre dans la direction axiale.

5. Servofrein (1) selon la revendication 4, **caractérisé en ce que** les coques de boîtier (3, 4) sont disposées au niveau de leurs parties marginales radialement extérieures en étant amenées en butée l'une contre l'autre dans la direction axiale.
